(19) Europäisches Patentamt

**European Patent Office**

**Office européen des brevets**

(11) Veröffentlichungsnummer: **0 331 766 B1**

(12) **EUROPÄISCHE PATENTSCHRIFT**

(45) Veröffentlichungstag der Patentschrift: **15.01.92**

(51) Int. Cl.⁵: **B23K 7/06**

(21) Anmeldenummer: **88103483.9**

(22) Anmeldetag: **05.03.88**

(54) Flämmbadseitenbegrenzung durch Granulierung.

(43) Veröffentlichungstag der Anmeldung:
**13.09.89 Patentblatt 89/37**

(45) Bekanntmachung des Hinweises auf die
Patenterteilung:
**15.01.92 Patentblatt 92/03**

(84) Benannte Vertragsstaaten:
**DE**

(56) Entgegenhaltungen:
**DE-B- 1 230 655       DE-B- 1 282 249**
**DE-B- 1 287 421       GB-A- 705 347**
**GB-A- 2 004 490       US-A- 2 260 322**
**US-A- 2 873 224**

(73) Patentinhaber: **FA. HORST K. LOTZ**
**Robert-Bosch-Strasse 3**
**W-6238 Hofheim-Wallau(DE)**

(72) Erfinder: **Grasis, Ivan**
**P.O. Box 605**
**Mascot 2020NSW(AU)**
Erfinder: **Lotz, Horst K.**
**Fasanenweg 7**
**W-6240 Königstein(DE)**

**Beschreibung**

Beim thermochemischen Schälen = Flämmen von Stahloberflächen zum Aufdecken oder zum Beseitigen von Fehlern wie z. B. Rissen oder Einschlüssen werden aus mehreren Flämmbrennern bestehende Flämmbrennerblöcke eingesetzt, bei denen aus den flämmbrennerbildenden Unterplatten (7) und Oberplatten (6) mit Heizsauerstoff und Heizgas versorgte Heizflammen und zwischen den Platten aus einem etwa 4-6 mm breiten Schlitz (9) reiner Sauerstoff (8) austreten. Der Flämmbrenner 85) oder die Flämmbrennerblockbreite bestimmen die Breite der Flämmbahn (2), d.h. die Einwirkung des Flämmsauerstoffes (8) auf das abzuhobelnde bzw. flämmzuhobelnde Material = Oberfläche (1). An den Rändern der Flämmbahn (2) entweder des Flämmbrenners oder des Flämmbrennerblockes entstehen Überläufe (4) aus geschmolzenem Stahl und aus Eisenoxyd mit Eisen gemischter Flämmschlacke. Dieser Überlauf ist metallisch fest mit der blanken Flämmbahn verbunden und es bedarf erheblicher Nacharbeit, diesen zu entfernen.

Dadurch wird die Anwendbarkeit des Flämmverfahrens sehr nachteilig beeinflußt. In der Vergangenheit und bei eigenen, einfacheren Anlagen wurde versucht, durch auch seitlich außerhalb der Flämmbrenner gelegenen Sauerstoff-Luft-gemischte Strahlen den Überlauf zu beseitigen. Es ist möglich, daß es solche weniger erfolgreichen Versuche mit dem Einsatz von Granulierwasser gibt. In der Patentschrift DE-B-1230 655 wird beispielsweise eine Vorrichtung beschrieben, bei der aus Spitzwasserdüsen über oder unter dem Flämmbrenner Wasserstrahlen am (zeitlichen) Ende des Flämmvorganges des Bereichs (räumlich) vor der Flämmlinie (= Brennlinie des Prozesses) treffen, um die vorgetriebene Restschlacke einmalig pro Flämmablauf bei einem Werkstück zu granulieren. Ansonsten ist es Stand der Technik und wird auch bei eigenen Anlagen eingesetzt, daß der Schlackevorlauf durch quer zur Flämmrichtung gerichtete Wasserstrahlen über der Werkstückoberfläche begrenzt und ein Verfahren beendendes Aufbauen eines Schlackenberges durch Granulieren und Abschieben zur Seite verhindert wird. Auch wurde versucht, durch die Reduzierung des Flämmsauerstoffs zum Rand hin einen möglichst überlauffreien Flämmbahnrand zu erzeugen, indem man den Querschnitt, des Flämmsauerstoffs zu den seitlichen Schlitzenden hin durch entsprechende Formgebung oder durch das Einlegen keilartiger Paßstücke verringerte. Die Patentschrift DE 26 38 304 beschreibt dieses Problem, das dem der nachstehenden Erfindung zugrundegelegten entspricht.

Nach dem deutschen Patent DE1287421.4 ist bekannt, daß zum Entfernen von Brennschneidbärten an einer Werkstückecke ein Flämmstrahl schräg auf diese Kante gerichtet ist und die benachbarte, senkrechte Schneidfläche mit Wasserstrahlen zusätzlich gegen Verschmutzung geschützt wird. Durch einen außerhalb seitlich zum Flämmbrenner angeordneten Luftstrahl soll der Flämmstrahl auf der der Schnittfläche entfernt befindlichen Seite begrenzt werden. Man geht dabei davon aus, daß die Tiefenwirkung in die Werkstückfläche, auf die der Flämmstrahl gerichtet ist, nur unwesentlich ist. Das nachfolgend beschriebene Verfahren beansprucht nicht nur eine praktisch 100%ige Vermeidung bzw. Beseitigung des Überlaufs während des Flämmens mit wesentlichen Tiefen von 1-4 mm und mehr zu bewirken, sondern sie gestattet auch entsprechend ausgerüstete und betriebene Brenner einzeln mit dieser Flämmbad-Seitenbegrenzung zu betreiben, oder auch mehrere solcher als Block zusammengefahrener Einzelbrenner mit einer gemeinsamen Flämmbahn an deren äußeren Rändern vom Überlauf freizuhalten.

In Bild 1 ist ein Flämmbrenner 5, der sich aus Oberplatte 6, aus Unterplatte 7 zwischen denen der Flämmsauerstoff 8 durch den so gebildeten Flämmschlitz 9 ausfließt über einem Werkstück 1 mit der hinter dem Brenner 5 schon tiefer liegenden Flämmbahn 2 als Seitenansicht dargestellt. Auf der Oberplatte 6 ist eine rohrartige Strahldüse 10 in einfacher Weise befestigt und wird über übliche Magnetventilsteuerung versorgt.

Bild 2 zeigt den Brenner 5 in der Draufsicht über dem Werkstück 1 bzw. der Flämmbahn 2 und zwar

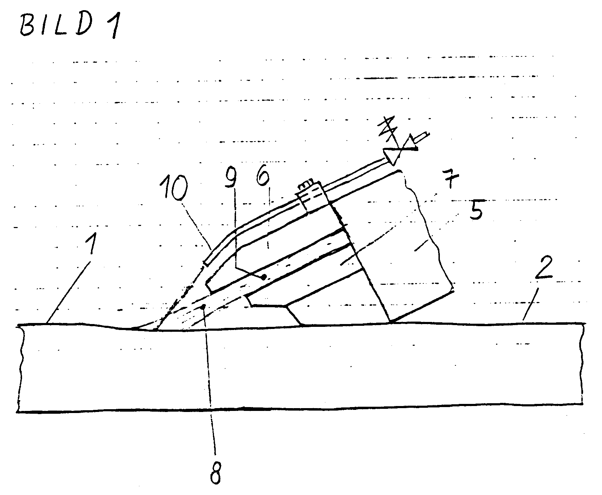

- einmal links als 1-Brennerausführung mit allen zu Bild 1 schon genannten Teilen symmetrisch angeordnet und dazu einen zu bearbeitenden Flämmbahnrand 11 im Bereich der vorderen Flämmbahn 2 im Übergang zu dem schmelzflüssigen Flämmbad 3 mit Flämmüberlauf 4, die der vorwärts bewegte Flämmbrenner 5 vor sich hertreibt.

- zum anderen Mal als 2-Brennerausführung mit eng zusammengefahrenen Brennern 5 zur Erzeugung einer entsprechend breiten Flämmbahn 2 mit allen aus dem Vorstehenden bekannten Teilen und Einzelheiten.

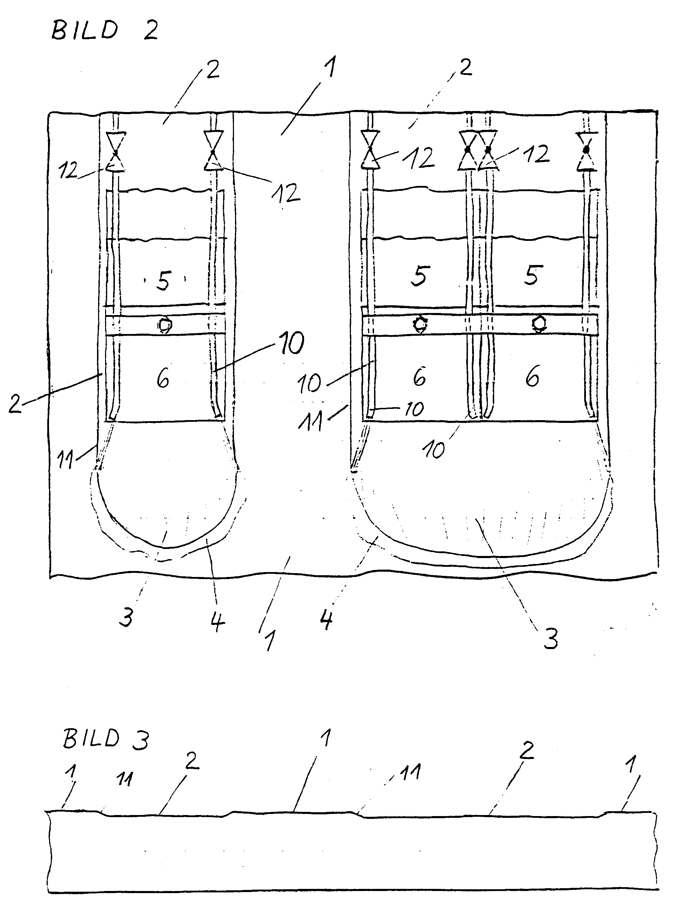

Das Bild 3 stellt einen Querschnitt durch das Werkstück 1 nach Bild 2 mit den durch die Materialabnahme des Flämmverfahrens tiefer liegenden Flämmbahnen 2 und den Flämmbahnrändern dar.

Zum seitlichen Begrenzen des Flämmbades 3 wird jeder einzelne Flämmbrenner (5) ohne Seitenplatten zur individuellen Flämmstrahl- = Sauerstoffstrahlbegrenzung, mit je 2 am Flämmbrennerrand innerhalb des Flämmschlitzes oder überhalb des Flämmschlitzes (9) angeordneten Strahldüsen (10) versehen, die einzeln abschaltbar sind. Durch diese Düsen wird Druckwasser oder Wasser-Luft-Gemisch mit einem Vordruck von 500 - 1500 KPA (= 5 - 15 bar) auf den jeweils zu reinigenden Flämmbahnrand von innen nach außen etwa 10 - 15 mm außerhalb des Flämmbades (3) und etwa 140 - 150 mm vor dem Flämmbrenner (5) auftreffend gerichtet, der die Flämmschlacke granulierend und einen metallischen Überlauf (4) begrenzend, den Flämmbahnrand (11) sauber hält. Die dabei auf der sonstigen Oberfläche anfalldenden Schlakkenreste sind leicht durch Kehren oder Abspritzen mit vielleicht weiterhin zusätzlich angeordneten, größeren Wasserstrahldüsen zu entfernen.

Der hierbei entstehende Übergang Flämmbahn (2)/Werkstückoberfläche 81) ist metallisch blank und je nach den angewendeten Druckverhältnissen konkav und verlaufend ausgebildet. Dazu liegend die Seitenbegrenzungsdüsen = Strahldüsen (10) etwa 30 - 40 mm über der oberen Brennerplatte (6) und innerhalb der Flämmbrennerbreite und sind so nach vorne und nach außen zur Seite hin abgebogen, daß der Granulierstrahl oben auf diese 10 - 15 mm neben der Flämmbahn bzw. 140 - 150 mm vor dem Brenner auftrifft. Dazu reicht kein Teil dieser Seitenbegrenzungseinrichtung seitlich über den Flämmbrenner hinaus und kann je nach Beschädigungsgefahr und Einwirkungsstärke die Vorderkante des Brenners überragen oder noch innerhalb der Brennerlänge enden. Die erfolgreichsten Versuche wurden mit Granulierdüsen erzielt, die etwa 20 mm kürzer als der Brenner (5) waren. Der Brenner (5) ist ohne seitliche Begrenzung ausgeführt, damit beim Zusammenschieben mehrerer Brenner zum Formieren eines Flämmbrennerblockes die Sauerstoffstrahlen bei sogenannten Flachbrennern einen gemeinsamen, ununterbrochenen Sauerstoffstrahl bilden. Die dann nicht mehr benötigten Strahldüsen (10) sind dazu mit einer Abschaltung (12) versehen. Die Strahldüsen (10) bestehen gemäß Versuch aus einem Kupferrohr oder ähnlich mit einem Außendurchmesser von 8 mm und einem Innendurchmesser von ca. 5 mm

Werden die Strahldüsen (10) mehr auf den eigentlichen Flämmbahnrand (11) gerichtet, so ist der gereinigte Übergang von Flämmbahn (2) zu Materialoberfläche (1) scharfkantiger ausgebildet bzw. die Flämmbahn (2) selbst wird um ein gewisses Maß je nach Strahlstärke verringert. Für diesen letztgenannten Fall lassen sich auch bei nicht zusammenschiebbaren Brennern kleinere Granulierdüsen aus Kupfer oder Edelstahl mit einem Durchmesser von 5 mm und einer Wandstärke von etwa 1 mm in den Flämmschlitzrand einlegen, wozu sie in eine seitlich an den Brenner anzuschraubende Begrenzungsplatte eingelötet sind. Das bedeutet, daß bei solchen Brennern (5) flämmbahnbreitenverringernde Granulierstrahlen mit schärferen Übergangskanten an der Flämmbahn erzeugt werden. Hier tritt der Granulierstrahl aus diesen Strahldüsen (10) parallel mit dem Flämmsauerstoff auf die Werkstückoberfläche auf.

## Patentansprüche

1. Verfahren zur Flämmbad-Seitenbegrenzung durch Granulierung, dadurch gekennzeichnet, daß Wasser oder ein Wasser-Luft-Gemisch aus einer oder zwei Strahldüsen (10), die seitlich im Flämmschlitz (9) zwischen der Ober- und Unterplatte (6, 7) oder über der Oberplatte (6) eines Maschinenflämmbrenners (5) innerhalb der Breite derselben jeweils seitlich angebracht und auf den Flämmbahnrand (11) gerichtet sind, mit einem Druck von 500 bis 1500 KPA (= 5 bis 15 bar) so nach außen strahlen, daß der Strahl etwa 100 mm oder mehr, vorzugsweise etwa 150 mm, vor dem Flämmbrenner (5) am Flämmbahnrand (11) auf den sich beim Flämmen bildenden Schlacke- bzw. Schlacke-Stahlüberlauf (4) auftrifft und einen schlackefreien Flämmbahnrand (11) erzeugt.

2. Verfahren zur Flämmbad-Seitenbegrenzung durch Granulierung nach Anspruch 1, dadurch gekennzeichnet, daß der oder, die aus der über dem Flämmbrenner (5) austretenden Wasser- oder Wasser-Luft-Strahlen mit einem Vordruck von 500 - 1500 KPA (= 5 - 15 bar) erzeugt werden und einen Strahldurchmesser von 4 - 10 mm haben.

3. Verfahren zur Flämmbad-Seitenbegrenzung durch Granulierung nach den Anspruchen 1 und 2, dadurch gekennzeichnet, daß die innerhalb einer Flämmbrennerbreite liegenden Strahldüsen (10) alternativ auf das Flämmbad (3) innerhalb oder außerhalb neben den Flämmbahnrand (11) gerichtet sind, um ihn von Schlacke gereinigt in Form und Breite auch bezogen auf die Gesamtbreite der Flämmbahn (2), zu beeinflussen.

4. Verfahren zur Flämmbad-Seitenbegrenzung durch Granulierung nach den Anspruchen 1 bis 3, dadurch gekennzeichnet, daß die einzelnen Strahlen gesondert zu- und abschaltbar sind, um entweder bei mehreren mit Abstand parallel oder in Gruppen oder bei allen als Block zusammenarbeitenden Flämmbrennern (5) für einzelne schmale oder breitere bzw. breite Flämmbahnen (2), die nur an den jeweiligen Flämmbahnrändern (11) einwirkenden Flämmbad-Seitenbegrenzungsstrahlen, zu betreiben.

5. Verfahren zur Flämmbad-Seitenbegrenzung durch Granulierung nach den Anspruchen 1 bis 4, dadurch gekennzeichnet, daß Seitenbegrenzungsstrahlen etwa 10 - 15 mm außerhalb der Flämmbrenner- oder Flämmbahnbreite auftreten.

6. Verfahren zur Flämmbad-Seitenbegrenzung durch Granulierung nach den Anspruchen 1 bis 5, dadurch gekennzeichnet, daß die Strahldüsen, ihre Abschaltung und ihre Halter über oder unter und hinter, aber nicht neben dem Flämmbrenner oder seiner Oberplatte bzw. seiner Unterplatte angeordnet sind, was ein Zusammenfahren aller Einzelbrenner zur Erzeugung einer gemeinsamen Flämmbahn erlaubt.

7. Verfahren zur Flämmbad-Seitenbegrenzung durch Granulierung nach den Anspruchen 1 bis 6, dadurch gekennzeichnet, daß alle Flämmbrenner (5) ohne einen seitlichen Abschluß des Flämmschlitzes, z. B. durch Platten, arbeiten, so daß ein aus mehreren Flämmbrennern (5) bestehender Brennerblock einen durchgehenden Flämmsauerstoffschlitz (9) hat.

**Claims**

1. Process to limit the scarfing bath (2) sides by granulation, characterized in that that water or a water/air mixture is blown out of one or two jet nozzles (10) arranged in an oxygen slot (9) between upper and lower plate (6, 7) or above an upper plate (6) of a scarfing burner (5) arranged within the width of it on each side and directed to the scarfing bath rim (11) with a pressure of 500 to 1500 KPA ( = 5 to 15 bar) to the outside so that the jet touches the slag or the slag-steel overflow (4) approx. 100 mm or more, preferably 150 mm in front of the scarfing burner (5) and produces a slag-free scarfing bath rim (11).

2. Process to limit the scarfing bath (2) sides by granulation as per claim No. 1, characterized in that that the water or water/air jets coming out above the scarfing burner (5) are produced with a pre-pressure of 500 - 1500 KPA ( = 5 to 15 bar) and have a jet diameter of 4 - 10 mm.

3. Process to limit the scarfing bath sides by granulation as per one of the claims 1 and 2, characterized in that that the jet nozzles (10) positioned inside a burner width are alternatively directed inside or outside of the scarfing bath besides the scarfing path rim (11), to influence the total width of the scarfing path (2) apart from cleaning slag away.

4. Process to limit the scarfing bath (2) sides by granulation as per one of the claims 1 to 3, characterized in that that the individual jets can be switched on or off separately, either to operate several burners (5) parallel with space between them or in multi-burner groups or with all scarfing burners (5) forming a unison block for individual narrow or wider respectively wide scarfing paths (2), with scarfing path-side limitation jets only effective at the respective scarfing path rims(11).

5. Process to limit the scarfing bath sides by granulation as per one of the claims 1 to 4, characterized in that that the side limitation jets come into contract approx. 10 - 15 mm outside the width of the scarfing burner (5) or of the scarfing path (2).

6. Process to limit the scarfing bath (2) sides by granulation as per one of the claims 1 to 5, characterized in that that the jet nozzles (10), their shut-off mechanism (12) and their holders are arranged above or below and behind but not beside the scarfing burner or its upper plate resp. its lower plate, which allows the moving together of all individual burners to produce a common scarfing path (2).

7. Process to limit the scarfing bath (2) sides by granulation as per one of the claims 1 to 6, characterized in that that all scarfing burners (5) work without a side limitation of the oxygen slot (9) i.e. without using side plates, so that a burner block consisting of several scarfing burners (5) has one interrupted scarfing oxygen slot (9).

**Revendications**

1. Procédé pour la limitation latérale du bain de décriquage: Un jet d'eau ou un mélange d' eau et d' air est jailli par un ou deux éjecteurs (10), qui sont arrangés latéralement dans la rainure de décriquage (9) entre la plaque supérieure et inférieure (6, 7) ou au dessus de la plaque supérieure (6) d un bruleur de décriquage mécanique (5). Les buses sont fixées latéralement sur la plaque et sont dirigées sur l'extérieur de la ligne de décriquage (11) d'une pression du jet de 500 à 1500 KPA ( = 5 à 15 bar). De cette manière, le jet touche les excédents de scorie respectivement le mélange de scorie et d'acier (4) au bord de la ligne de décriquage (11) dans une distance de 100 ou de préférence de 150 mm devant le bruleur de décriquage (5), formant ainsi un bord de décriquage propre et exempt de scories.

**2.** Procédé pour la limitation latérale du bain de décriquage par granulation selon spécification no. 1, caractérisé par le / les jets d'air respectivement d'un mélange d'air et d'eau sortant au dessus du bruleur de décriquage (5) avec une pré-pression de 500 à 1500 KPA (= 5 à 15 bar) et un diamètre du jet de 4 à 10 mm.

**3.** Procédé pour la limitation latérale du bain de décriquage par granulation selon les spécifications no. 1 et 2, caractérisé par des éjecteurs (10) d'un rayon d'activité à l'intérieur du bruleur de décriquage, qui sont alternativement dirigés sur le bain de décriquage (3) à l'intérieur ou à l'extérieur du bord de décriquage (11) pour en écarter toutes scories et pour l'influer en dépendance de la forme et de la largeur totale de la ligne de décriquage.

**4.** Procédé pour la limitation latérale du bain de décriquage par granulation selon les spécifications no. 1 - 3, caractérisé par les jets séparément connectables et déconnectables afin d'utiliser les bruleurs de décriquage (5) à choix en distance parallèle, en groupes ou en bloc dépendant de la largeur de la ligne de décriquage (2) correspondante. De cette manière, les jets de limitation latérale du bain de décriquage sont bien adaptables à la largeur en question et n' influent que les bords individuels (11) de la ligne de décriquage.

**5.** Procédé pour la limitation latérale du bain de décriquage par granulation selon les spécifications no. 1 - 4, caractérisé par des jets touchant la surface à décriquer d' une distance de 10 à 15 mm à l' extérieur de la largeur de la ligne de décriquage ou du rayon d' action du chalumeau de décriquage.

**6.** Procédé pour la limitation latérale du bain de décriquage par granulation selon les spécifications no. 1 - 5, caractérisé par la localisation des éjecteurs, de leur déconnexion et de leurs fixations au dessus ou au dessous et derrière du bruleur à décriquage, mais non à la coté du bruleur ou de sa plaque supérieure ou inférieure, ce qui rend possible un rencontre de tous les bruleurs individuels en bloc, afin de réaliser une ligne de décriquage commun.

**7.** Procédé pour la limitation latérale du bain de décriquage par granulation selon les spécifications no. 1 - 6, caractérisé par le fait que tous les bruleurs de décriquage (5) fonctionnent sans limitation latérale (par exemple à l'aide de plaques) de la rainure de décriquage, afin d'obtenir une rainure commune d'oxygène de décriquage (9) résultant par l'application en bloc de plusieurs bruleurs de décriquage (5).

5

BILD 1

BILD 2

BILD 3